# EUROPÄISCHE PATENTSCHRIFT

(11) **EP 1 089 483 B1**
(45) Veröffentlichungstag und Bekanntmachung des Hinweises auf die Patenterteilung: **20.04.2005**
(21) Anmeldenummer: 00119447.1
(22) Anmeldetag: 14.09.2000
(51) Int. Cl.: H04L 7/02

(54) **Takt-Synchronisationsschaltung für Empfangssysteme**
Clock synchronisation circuit for receivers
Circuit de synchronisation d'horloge pour systèmes de réception

(30) Priorität: 30.09.1999 DE 19947046
(43) Veröffentlichungstag der Anmeldung: 04.04.2001
(73) Patentinhaber: Micronas Munich GmbH, 81541 München (DE)
(72) Erfinder: Schöllhorn, Peter, 83607 Holzkirchen (DE)
(74) Vertreter: Patentanwälte Westphal, Mussgnug & Partner

(56) Entgegenhaltungen:
- RENFORS M ET AL: "Efficient IIR filters for pulse-shaping and jitter free frequency error detection and timing recovery" GLOBAL TELECOMMUNICATIONS CONFERENCE, 1995. CONFERENCE RECORD. COMMUNICATION THEORY MINI-CONFERENCE, GLOBECOM '95., IEEE SINGAPORE 13-17 NOV. 1995, NEW YORK, NY, USA,IEEE, US, 13. November 1995 (1995-11-13), Seiten 1440-1444, XP010164459 ISBN: 0-7803-2509-5
- VAISANEN K ET AL: "All-digital symbol timing recovery scheme utilizing efficient IIR prefiltering" PERSONAL, INDOOR AND MOBILE RADIO COMMUNICATIONS, 1997. WAVES OF THE YEAR 2000. PIMRC '97., THE 8TH IEEE INTERNATIONAL SYMPOSIUM ON HELSINKI, FINLAND 1-4 SEPT. 1997, NEW YORK, NY, USA,IEEE, US, 1. September 1997 (1997-09-01), Seiten 821-824, XP010247562 ISBN: 0-7803-3871-5
- BAO J ET AL: "A New Timing Recovery Method For Dtv Receivers" WPM 17.3, ADVANCED TELEVISION LABORATORY, MITSUBISHI ELECTRIC ITA, 2. Juni 1998 (1998-06-02), Seiten 292-293, XP010283083
- ZHANG HANG ET AL: "A study of performance of all-digital symbol synchronizers with polynomial interpolators" COMMUNICATION TECHNOLOGY PROCEEDINGS, 1996. ICCT'96., 1996 INTERNATIONAL CONFERENCE ON BEIJING, CHINA 5-7 MAY 1996, NEW YORK, NY, USA,IEEE, US, 5. Mai 1996 (1996-05-05), Seiten 1013-1016, XP010532980 ISBN: 0-7803-2916-3

## Beschreibung

Die Erfindung bezieht sich auf eine Takt-Synchronisatonsschaltung, die in Empfangssystemen zur Rückgewinnung eines im empfangenen Signal enthaltenen Datentaktsignals eingesetzt werden kann.

Bei Systemen zum Empfang digitaler Daten erfolgt die Auswertung des empfangenen Signals synchron zu einem Datentakt. Dieser wird aus einem Datentaktsignal, das im empfangenen Signal mit enthalten ist, abgeleitet. Dazu eignet sich eine Regelschaltung, bei der das empfangene Signal im ersten Schritt asynchron zum Datentakt abgetastet wird. Das Taktsignal des für die Abtastung eingesetzten Analog-Digital-Umwandlers ist stets unabhängig vom Datentakt. Aus den Ausgangswerten des Analog-Digital-Umsetzers berechnet dann ein Interpolator Abtastwerte, die in einem Taktraster liegen, das synchron zum Datentakt ist. Eine solche Regelschaltung weist in der Regel einen Phasendetektor auf, beispielsweise wie er beschrieben ist in dem Artikel "A BPSK/QPSK Timing-Error Detector for Sampled Receivers" von Floyd M. Gardner in IEEE Transactions on Communications, Vol. Com. 34, No. 5, May 1986, Seiten 423 bis 429.

Der Phasendetektor erzeugt neben dem gewünschten Phasenfehlersignal auch ein starkes Rauschsignal, das als Eigenrauschen bezeichnet wird. Das Eigenrauschen wirkt sich störend auf das Regelverhalten der Regelschaltung aus. Um es zu dämpfen, wird dem Phasendetektor ein Schleifenfilter nachgeschaltet, das sehr schmalbandig dimensioniert werden muß. Dies führt allerdings zu einem trägen Regelverhalten der Regelschaltung. Zudem wird der Fangbereich, also die maximale Differenz der Abtastfrequenzen an Ein- und Ausgang des Interpolators, bis zu der eine Ausregelung möglich ist, stark eingeschränkt.

In der EP 0 647 376 B1 ist ein Taktphasendetektor beschrieben, bei dem das Eigenrauschen und der damit verbundene Taktphasenjitter beseitigt sind. Der Phasenjitter entsteht als Folge der Abhängigkeit des Zwischenabtastwertes von den benachbarten Hauptabtastwerten sowie den übrigen Sendesymbolen. Nach der Lehre des genannten Dokuments wird der Phasenjitter beseitigt durch Subtraktion der Einflüsse der beteiligten Sendesymbole von diesem Zwischenabtastwert. Die Hauptabtastwerte werden dabei nach einer Filterung durch ein Transversalfilter von den einer Verzögerung unterworfenen Zwischenwerten subtrahiert. Die Verzögerung der Zwischenabtastwerte entspricht der Laufzeit, die die Hauptabtastwerte durch das Transversalfilter benötigen. Durch das Transversalfilter und die Verzögerung wird der Fangbereich der Regelschaltung weiter vermindert, da eine zusätzliche Totzeit durch die Verzögerung entsteht.

In RENFORS et al: 'Efficient IIR filters for pulse-shaping and jitter free frequency error detection and timing recovery' CLOBAL COMMUNICATION THEORY MINICONFERENCE, GLOBECOM '95., IEEE SINGAPORE 13-17 NOV. 95, NEW YORK, NY, USA, IEEE, US, 13.11.1995; Seiten 1440-1444, XP010164459 ISBN: 0-7803-2509-5 und VAISANEN K et al: 'All-digital symbol timing recovery scheme utilizing efficient IIR prefiltering' PERSONAL, INDOOR AND MOBILE RADIO COMMUNICATIONS, 1997. WAVES OF THE YEAR 2000. PIMRC '97., THE 8TH IEEE INTERNATIONAL SYMPOSIUM ON HELSINKI, FINLAND 1-4 SEPT. 1997, NEW YORK, NY, USA, IEEE, US, 1.9.1997, Seiten 821-824, XP010247562 ISBN: 0-7803-3871-5 sind Empfangssysteme mit Takt-Synchronisationsschaltungen und IIR-Filtern als Pulsformungsfilter beschrieben.

Aufgabe der vorliegenden Erfindung ist es, eine Takt-Synchronisationsschaltung für Empfangssysteme anzugeben, bei der der Taktphasenjitter beseitigt wird und die ohne Verzögerung der Haupt- oder Zwischenabtastwerte auskommt. Diese Aufgabe wird mit einer Takt-Synchronisatonsschaltung mit den Merkmalen des Patentanspruches 1 gelöst.

Die Erfindung hat den Vorteil, daß die vom Pulsformungsfilter erzeugten Hauptabtastwerte ohne zusätzliche Verzögerung, also direkt dem Phasendetektor zugeführt werden. Weiterhin ist von Vorteil, daß die Hauptabtastwerte, die das Pulsformungsfilter erzeugt, keiner weiteren Filterung unterzogen werden müssen. Vorteilhaft ist auch, daß die Zwischenabtastwerte nach dem Jitterreduktionsfilter nicht zusätzlich zur Anpassung von Laufzeiten verzögert werden. Die Subtraktion der transversal gefilterten Hauptabtastwerte von den verzögerten Zwischenabtastwerten entfällt.

Vorzugsweise weist das Jitterreduktionsfilter Bandpaßverhalten auf mit einer Mittenfrequenz, die der halben Symbolfrequenz entspricht. Bei der Mittenfrequenz ist die Dämpfung des Bandpaßes am geringsten. Die Symbolfrequenz ist der reziproke Wert der Dauer eines Symbols.
Ein Hochpaß, der der den Durchlaßbereich des Bandpaßes einschließt, ist ebenfalls geeignet.

Die Takt-Synchronisationsschaltung läßt sich in Empfangssystemen einsetzen, die für digitale Einträger-Verfahren geeignet sind. Zu den digitalen Einträger-Verfahren gehören beispielsweise die Quadratur-Amplitudenmodulation (QAM) oder die Quadratur-Phasenumtastung (QPSK).

Ausgestaltungen der Erfindung sind in Unteransprüchen gekennzeichnet.

Die Erfindung wird nachfolgend anhand der Figuren in der Zeichnung näher erläutert. Entsprechende Elemente sind mit gleichen Bezugszeichen versehen. Es zeigen:
Figur 1 eine Takt-Synchronisationsschaltung mit Transversalfilter und Verzögerungsgliedern,
Figur 2 eine Takt-Synchronisationsschaltung mit einem Jitterreduktionsfilter und
Figur 3 einen Frequenzgang des Pulsformungsfilters.

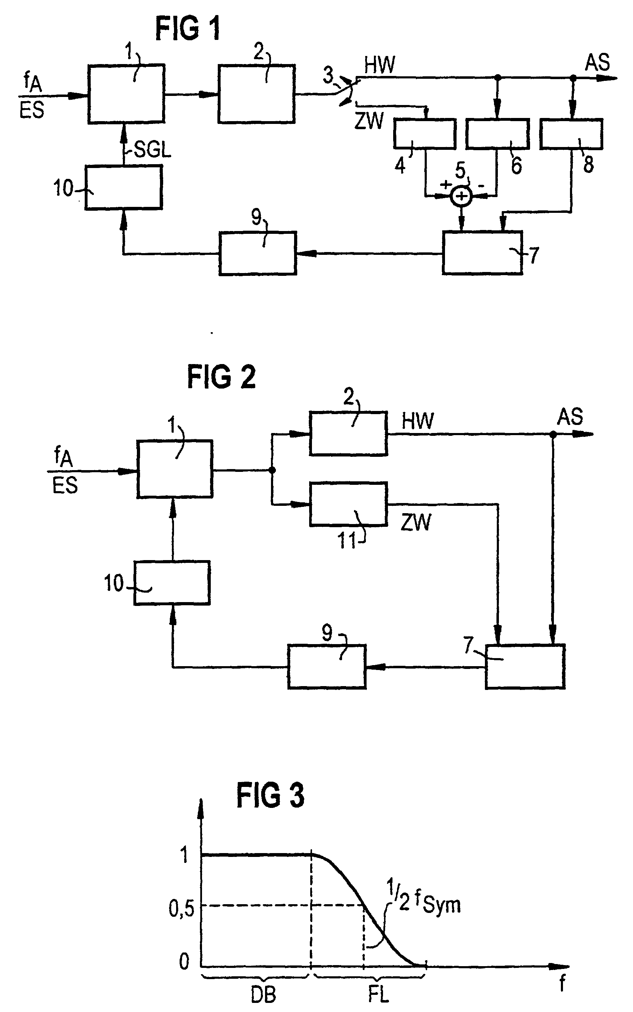

Die Takt-Synchronisatonsschaltung gemäß Figur 1 enthält einen Taktphasendetektor nach der EP 0 647 376 B1. Die Schaltung weist einen Interpolator 1 auf, der ausgangsseitig mit einem Pulsformungsfilter 2 verbunden ist. Das Ausgangssignal des Pulsformungsfilters 2, das das Ausgangssignal des Interpolators 1 einer Pulsformung unterzieht, wird einem Demultiplexer 3 zugeführt. Der Demultiplexer 3 führt das Ausgangssignal des Pulsformungsfilters 2 wechselweise einem ersten und einem zweiten Zweig zu. Der zweite Zweig ist über ein erstes Verzögerungsglied 4 mit einem Subtraktionsglied 5 verbunden.

Der erste Zweig, an dem ein Ausgangssignal AS zur Verfügung steht, ist über ein Transversalfilter 6 mit einem weiteren Eingang des Subtraktionsgliedes 5 verbunden. Das Substraktionsglied 5 bildet die Differenz aus einem mit dem ersten Verzögerungsglied verzögerten Signal und dem mit dem Transversalfilter gefilterten Ausgangssignal AS. Die Differenz wird einem ersten Eingang eines Phasendetektors 7 zugeführt. Der erste Zweig ist über ein zweites Verzögerungsglied 8 mit einem zweiten Eingang des Phasendetektors 7 verbunden. Der Phasendetektor 7 ist über ein Schleifenfilter 9 und einen Taktgeber 10 mit einem Steuereingang des Interpolators 1 verbunden.

Das analoge Empfangssignal ES, das beispielsweise von einer in der Figur nicht dargestellten Empfangseinheit stammt, wird mit einer Abtastfrequenz f_{A} asynchron abgetastet und dem Interpolator 1 zugeführt. Pro Symboldauer erhält der Phasendetektor 7 an seinen Eingängen einen Abtastwert. Der Interpolator 1 berechnet zu Zeitpunkten, die der Taktgeber 10 mit einem Steuersignal SGL an einem Steuereingang des Interpolators 1 vorgibt, aus Stützwerten des Empfangssignals ES Synchronwerte. Die Synchronwerte sind im eingeschwungenen Zustand der Synchronisationsschaltung synchron zu einem Symboltakt, den das Empfangssignal ES enthält. Die Synchronwerte werden im Pulsformungsfilter 2 der Pulsformung unterzogen und an den Demultiplexer 3 weitergeleitet.

Im ersten Zweig stehen Hauptabtastwerte mit der Symbolfrequenz f_{Sym} zur Verfügung. Im zweiten Zweig des Demultiplexers 3 liegen Zwischenabtastwerte ZW an, die zu den Hauptabtastwerten benachbart sind. Die Zwischenabtastwerte ZW werden in dem ersten Verzögerungsglied 4 um die Zeitdauer Tᵥ verzögert. Von diesen verzögerten Werten werden die mittels des Transversalfilters 6 gefilterten Hauptabtastwerte HW subtrahiert. Die Differenz stellt ein erstes Eingangssignal des Phasendetektors 7 dar. Ein zweites Eingangssignal wird aus den Hauptabtastwerten durch Verzögerung in dem zweiten Verzögerungsglied 8 abgeleitet. Die Dauer der Verzögerung im zweiten Verzögerungsglied entspricht ungefähr der Verzögerungsdauer T_{V} des ersten Verzögerungsgliedes 4. Die Verzögerungsdauer T_{V} entspricht ungefähr der Laufzeit, die einer der Hauptabtastwerte HW durch das Transversalfilter 6 benötigt. Der Phasendetektor 7 ermittelt aus den Hauptabtastwerten HW und den Zwischenabtastwerten ZW eine Phasendifferenz zwischen den Synchronwerten und einem Symbolraster, das synchron zum Symboltakt ist.

Die Zwischenabtastwerte ZW setzen sich hauptsächlich aus zwei Anteilen zusammen, die von der Phasendifferenz und durch die benachbarten Hauptabtastwerte HW bestimmt werden. Nur der erste Anteil ist erwünscht, der zweite Anteil stellt das Eigenrauschen dar. Der Anteil des Eigenrauschens, der durch die Hauptabtastwerte HW verursacht wird, wird durch das Transversalfilter 6 geschätzt und von dem verzögerten Zwischenabtastwerten ZW subtrahiert. Dabei wird vorausgesetzt, daß die Hauptabtastwerte HW durch die Phasendifferenz, also den zeitlichen Versatz des Abtastzeitpunktes, durch die Takt-Synchronisatonsschaltung selbst nur wenig verfälscht werden. Dazu ist es erforderlich, daß sowohl die Hauptabtastwerte HW als auch die Zwischenabtastwerte ZW durch das Pulsformungsfilter 2 ermittelt werden.

Die Phasendifferenz wird als Detektor-Ausgangssignal durch das Schleifenfilter 9 gefiltert und an den Taktgeber 10 weitergegeben. Das Schleifenfilter 9 dient zur Glättung des Detektor-Ausgangssignals. Der Taktgeber 10 steuert den Interpolator 1 über seinen Steuereingang so an, daß das Ausgangssignal AS die aus dem Empfangssignal ES abgeleiteten Werte im Symbolraster aufweist, also synchron zum Symboltakt vorliegen.

Bei einer verbesserten Takt-Synchronisationsschaltung gemäß Figur 2 ist der Interpolator 1 ausgangsseitig sowohl mit einem Eingang des Pulsformungsfilters 2 als auch mit einem Eingang eines Jitterreduktionsfilters 11 verbunden.

Eingangsseitig wird ihm das Empfangssignal ES zugeführt. Das Pulsformungsfilter 2 erzeugt an einem Ausgang direkt die Hauptabtastwerte HW als Ausgangssignal AS. Das Jitterreduktionsfilter 11 liefert unmittelbar die Zwischenabtastwerte ZW. Die Zwischenabtastwerte ZW werden dem ersten Eingang, die Hauptabtastwerte HW dem zweiten Eingang des Phasendetektors 7 zugeführt. Das Detektor-Ausgangssignal wird nach Filterung im Schleifenfilter 9 und Umwandlung im Taktgeber 10 als Steuersignal an den Steuereingang des Interpolators 1 weitergegeben. Im eingeschwungenen Zustand gibt das Steuersignal SGL dem Interpolator 1 die Zeitpunkte vor, zu denen die Symbolwerte berechnet werden müssen, damit sie in einem Raster synchron zur Symbolfrequenz liegen.

In Figur 3 ist beispielhaft ein Frequenzgang des Pulsformungsfilters 2 dargestellt. Die eingetragene Kurve läßt sich in zwei Bereiche teilen. In einem Durchlaßbereich DB weist das Filter 2 idealerweise keine Dämpfung auf, die Durchlässigkeit ist 1.
Ein zweiter Bereich besteht aus einer Flanke FL. Sie überdeckt die Frequenzen, bei denen die Durchlässigkeit gerade infinitesimal kleiner als 1 ist bis zu der Frequenz, bei der die Durchlässigkeit Null ist, also dort wo die Kurve die Frequenzachse schneidet. Innerhalb der überdeckten Frequenzen fällt die Kurve monoton.
In der Mitte der Flanke, also da wo die Durchlässigkeit (bzw. die Dämpfung) 0,5 beträgt und die Flanke den halben maximalen Wert aufweist, entspricht die Frequenz der halben Symbolfrequenz f_{Sym}.

Das Jitterreduktionsfilter 11 weist einen Durchlaßbereich auf, der die Flanke des Pulsformungsfilters 2 umfaßt. Das Jitterreduktionsfilter 11 weist vorzugsweise Bandpaßverhalten auf. Eine gute Rauschreduktion und somit ein gutes Regelverhalten der Takt-Synchronisationsschaltung wird erreicht, wenn die Mittenfrequenz des Bandpasses des Jitterreduktionsfilters mit der halben Symbolfrequenz f_{Sym} übereinstimmt.

Die Takt-Synchronisationsschaltung nach Figur 2 ist für eine eindimensionale Modulation angegeben. Bei einer zweidimensionalen Modulation, z. B. QPSK, QAM ist der Schaltungsteil, der den Interpolator 1, das Pulsformungsfilter 2, das Jitterreduktionsfilter 11 und den Phasendetektor 7 enthält, doppelt vorzusehen. Das Detektor-Ausgangssignal und ein Ausgangssignal des weiteren Phasendetektors werden vor dem Schleifenfilter 9 addiert. Der Taktgeber 10 steuert bei zweidimensionaler Modulation dem Interpolator 1 und einen weiteren Interpolator.

Das Regelverhalten kann weiter verbessert werden, wenn bei einer Dimensionierung des Jitterreduktionsfilters 11 eine Übertragungsfunktion des Interpolators 1 berücksichtigt wird. So kann die Übertragungsfunktion des Jitterreduktionsfilters 11 so gewählt werden, daß die Übertragungsfunktion des Interpolators 1 kompensiert wird.

## Patentansprüche

1. Takt-Synchronisatonsschaltung für Hochfrequenz-Empfangssysteme zum Empfang digitaler Daten mit
- einem Interpolationsfilter (1), das zu aus Abtastung eines Eingangssignals (ES), das eine Symbolfrequenz (f_{Sym}) aufweist, gewonnenen Stützwerten Synchronwerte zu Zeitpunkten berechnet, die von einem Synchrontakt vorgegeben sind,
- einem Pulsformungsfilter (2) mit einem Frequenzgang mit einer Flanke, deren halber maximaler Wert bei der halben Symbolfrequenz (f_{Sym}) liegt, zur Ermittlung von Hauptabtastwerten (HW) aus den Synchronwerten,
- einem Phasendetektor (7) zur Ermittlung einer Phasendifferenz zwischen den Hauptabtastwerten (HW) und Vergleichswerten (ZW),
- einem Taktgeber (10) zur Erzeugung des Synchrontaktes, wobei der Phasendetektor (7) den Taktgeber (10) mit einem Steuersignal (SGL) so ansteuert, daß die Phasendifferenz verringert wird,
**gekennzeichnet durch** ein Jitterreduktionsfilter (11) mit einem Durchlaßbereich, der die Flanke des Frequenzganges des Pulsformungsfilters (2) umfaßt,
wobei dem Jitterreduktionsfilter (11) die Synchronwerte zugeführt werden und das Jitterreduktionsfilter (11) die Vergleichswerte (zw) liefert.

2. Takt-Synchronisatonsschaltung nach Anspruch 1,
**dadurch gekennzeichnet,**
**daß** das Jitterreduktionsfilter (11) Bandpaßverhalten aufweist mit einer Mittenfrequenz, die bei der halben Symbolfrequenz (f_{Sym}) liegt.

3. Takt-Synchronisatonsschaltung nach einem der Ansprüche 1 oder 2,
**dadurch gekennzeichnet,**
**daß** das Jitterreduktionsfilter (11) eine Übertragungsfunktion aufweist, die eine Übertragungsfunktion des Interpolationsfilters (1) kompensiert.

4. Takt-Synchronisatonsschaltung nach einem der Ansprüche 1 bis 3,
**dadurch gekennzeichnet,**
**daß** zwischen den Phasendetektor (7) und den Taktgeber (10) ein Schleifenfilter (9) zur Glättung des Steuersignals (SGL) geschaltet ist.

## Claims

1. A clock synchronisation circuit for high-frequency receive systems for receiving digital data having
- an interpolation filter (1), which at support values obtained from sampling an input signal (ES) comprising a symbol frequency (f_{sym}) calculates synchronising signal levels at instants which are set by a clock,
- a pulse shaping filter (2) having a frequency response with an edge, half the maximum value of which lies at half the symbol frequency (f_{sym}), for determining main sampling values (HW) from the synchronising signal levels,
- a phase detector (7) for determining a phase difference between the main sampling values (HW) and comparison values (ZW),
- a clock pulse generator (10) for generating the clock, with the phase detector (7) controlling the clock pulse generator (10) with a control signal (SGL) so that the phase difference is reduced,
**characterised by** a jitter reduction filter (11) having a pass band, which comprises the edge of the frequency response of the pulse shaping filter (2), with the synchronising signal levels being supplied to the jitter reduction filter (11) and the jitter reduction filter (11) providing the comparison values (ZW).

2. A clock synchronisation circuit according to Claim 1,
**characterised in that** the jitter reduction filter (11) comprises band pass response with a mid frequency which is half the symbol frequency (f_{sym}).

3. A clock synchronisation circuit according to one of Claims 1 or 2,
**characterised in that** the jitter reduction filter (11) comprises a transfer function, which compensates a transfer function of the interpolation filter (1).

4. A clock synchronisation circuit according to one of Claims 1 to 3,
**characterised in that** a loop filter (9) for smoothing the control signal (SGL) is switched between the phase detector (7) and the clock pulse generator (10).

## Revendications

1. Circuit de synchronisation d'horloge pour des systèmes de réception à haute fréquence de données numériques, comprenant :
- un filtre d'interpolation (1) qui, pour calculer des valeurs d'appui obtenues par exploration d'un signal d'entrée (ES) présente une fréquence de symbole (f_{Sym}), calcule des niveaux de synchronisation à des instants prédéfinis par une horloge de synchronisation,
- un filtre de conformation d'impulsions (2) avec une courbe de réponse présentant un flanc dont la moitié de la valeur maximale se trouve à la moitié de fréquence de symbole (f_{Sym}), pour déterminer des échantillons principaux (HW) à partir des niveaux de synchronisation,
- un détecteur de phase (7) pour établir une différence de phase entre les échantillons principaux (HW) et des valeurs de comparaison (ZW),
- un synchroniseur (10) pour produire la cadence de synchronisation, et commandé par le détecteur de phase (7), au moyen d'un signal de commande (SGL), de manière à diminuer la différence de phase,
**caractérisé par**
un filtre de réduction de grille (11) présentant une bande passante qui englobe le flanc de la courbe de réponse du filtre de conformation d'impulsions (2), les valeurs de synchronisation étant adressées au filtre de réduction de grille (11) qui délivre les valeurs de comparaison (ZW).

2. Circuit de synchronisation selon la revendication 1,
**caractérisé en ce que**
le filtre de réduction de grille (11) présente une réponse de passe-bande avec une fréquence moyenne qui se trouve au niveau de la moitié de la fréquence de symbole (f_{Sym}).

3. Circuit de synchronisation selon la revendication 1 ou 2,
**caractérisé en ce que**
le filtre de réduction de grille (11) présente une fonction de transmission qui compense une fonction de transmission du filtre d'interpolation (1).

4. Circuit de synchronisation selon une des revendications 1 à 3,
**caractérisé en ce que**
entre le détecteur de phase (7) et le synchroniseur (10) est monté un filtre de boucle (9) pour lisser le signal de commande (SGL).
